# EUROPÄISCHE PATENTSCHRIFT

(11) **EP 1 486 266 B1**
(45) Veröffentlichungstag und Bekanntmachung des Hinweises auf die Patenterteilung: **06.04.2011**
(21) Anmeldenummer: 04010741.9
(22) Anmeldetag: 06.05.2004
(51) Int. Cl.: B21B 1/18, B60H 1/00

(54) **Heizvorrichtung mit einer elektrischen Wärmequelle zum Erwärmen eines Fluids in einer Fluidleitung eines Kraftfahrzeugs**
Heating apparatus with an electrical heat source for heating a fluid in a fluid conduit of motor vehicle
Appareil de chauffage comportant une source de chaleur électrique pour chauffer un fluide dans un conduit de fluide d'un véhicule automobile

(30) Priorität: 14.06.2003 DE 10326894
(43) Veröffentlichungstag der Anmeldung: 15.12.2004
(73) Patentinhaber: NORMA Germany GmbH, 63277 Maintal (DE)
(72) Erfinder: Wickel, Uwe, 34637 Schrecksbach (DE); Bahner, Frank, 63071 Offenbach/Main (DE); Bauer, Andreas, 63936 Schneeberg (DE); Strauss, Oliver, 61130 Nidderau (DE); Böhm, Jürgen, 63179 Obertshausen (DE); Rastetter, Marc, 61137 Schöneck (DE)
(74) Vertreter: Knoblauch, Andreas

(56) Entgegenhaltungen:
- DE-C- 331 645
- US-A- 4 292 503
- US-A- 5 243 573
- US-A- 5 359 179

## Beschreibung

Die Erfindung bezieht sich auf eine Heizvorrichtung mit einer elektrischen Wärmequelle zum Erwärmen eines Fluids in einer Fluidleitung eines Kraftfahrzeugs und mit einer Wärmeleiteinrichtung, die mit der Wärmequelle in Verbindung steht.

Eine Heizvorrichtung dieser Art ist aus der EP 1158158 A1 bekannt. Bei dieser bekannten Heizvorrichtung ist der Deckel eines Gehäuses einstückig mit einem separaten Fluidleitungsteil verbunden, der in den Verlauf der Fluidleitung einkuppelbar ist, um durch die Fluidleitung geleiteten Dieselkraftstoff bei tiefen Temperaturen elektrisch zu beheizen. Häufig sind jedoch verschiedene Stellen einer Fluidleitung tieferen Temperaturen ausgesetzt, wobei diese Stellen erst durch Versuche ermittelt werden müssen. Es ist daher nicht immer möglich, die Fluidleitungen von vornherein so zu bemessen, daß das Fluidleitungsstück mit der Heizvorrichtung möglichst genau an der Stelle eingesetzt werden kann, an der die Temperatur am niedrigsten ist.

Weitere Heizvorrichtungen gemäß dem Oberbegriff des Anspruches 1 sind aus US 5 359 179 A und US 4 292 503 A bekannt.

Der Erfindung liegt daher die Aufgabe zugrunde, eine Heizvorrichtung der eingangs genannten Art anzugeben, die eine größere Flexibilität der Ausbildung der Fluidleitung gestattet.

Erfindungsgemäß ist diese Aufgabe dadurch gelöst, daß die Wärmeleiteinrichtung mit einer Schelle zum Verbinden der Wärmeleiteinrichtung mit der Fluidleitung verbunden ist.

Bei dieser Lösung ermöglicht die Schelle das Anbringen der Heizvorrichtung an nahezu jeder beliebigen Stelle der Fluidleitung, wo die Fluidleitung tieferen Temperaturen ausgesetzt ist, ohne die Fluidleitung an einer solchen Stelle unterbrechen zu müssen.

Die Wärmeleiteinrichtung weist einen Metallstreifen auf, dessen eines Ende mit der Wärmequelle in Kontakt steht und dessen anderes Ende mit der Schelle verbunden ist. Dieser Metallstreifen ermöglicht die Wärmeübertragung von der Wärmequelle über die Schelle auf die Fluidleitung.

Die Schelle kann zwei Teile aufweisen, die an ihrem einen Ende gelenkig zusammensteckbar und an ihrem anderen Ende durch einen Verschluß verbindbar sind. Eine solche Ausbildung der Schelle ermöglicht ein einfaches Anbringen der Schelle an der Fluidleitung.

Der Verschluß kann spannbar sein. Er ermöglicht dann die Anbringung der Heizvorrichtung an Fluidleitungen mit unterschiedlichem Umfang, soweit er im Spannbereich der Schelle liegt.

Ein besonders einfach zu betätigender Verschluß ist ein Rastverschluß.

Wenn der Verschluß an den zu verbindenden Enden der Schellenteile je eine von zwei in Eingriff bringbaren Verzahnungen aufweist, läßt er sich ebenfalls entsprechend der Anzahl verschiedener Zähne, die in Eingriff gebracht werden können, auf unterschiedliche Fluidleitungsdurchmesser einstellen.

Die eine Verzahnung kann dabei in einer Ausnehmung in dem einen der durch den Verschluß zu verbindenden Enden des einen Schellenteils ausgebildet und das andere der durch den Verschluß zu verbindenden Enden in die Ausnehmung einführbar sein. Auf diese Weise wird ein unbeabsichtigtes Öffnen des Verschlusses weitgehend verhindert.

Vorzugsweise ist dafür gesorgt, daß der Metallstreifen eine Wölbung aufweist. Diese Wölbung ermöglicht eine großflächige Wärmeübertragung in die Fluidleitung.

Ferner kann die Wölbung zumindest in einem mit dem einen Schellenteil verbundenen Endabschnitt des Metallstreifens eine zur Mittelachse der Fluidleitung konzentrische Krümmungsachse aufweisen. Die Wölbung ermöglicht dann eine innige Verbindung der Heizvorrichtung mit der Fluidleitung.

Vorzugsweise sind die Schellenteile im Spritzgießverfahren ausgebildet. Dies ermöglicht eine einfache Herstellung der Schellenteile, insbesondere wenn sie thermoplastischen Kunststoff aufweisen.

Der Metallstreifen kann durch den thermoplastischen Kunststoff der Schelle umspritzt sein. Er läßt sich dann gleichsam wie bei einer einstückigen Ausbildung mit dem Schellenteil handhaben. Hierbei ist vorzugsweise dafür gesorgt, daß der den Metallstreifen umgebende Kunststoff an dem von der Schelle abgekehrten Ende des Metallstreifens als Fassung zur Aufnahme der Wärmequelle geformt ist und der Kunststoff in der Fassung wenigstens eine Kontaktfläche des Metallstreifens zur thermischen und elektrischen Kontaktierung durch wenigstens ein Heizelement der Wärmequelle freiläßt. Dies ermöglicht eine einfache Montage des oder jedes Heizelements an dem Metallstreifen.

Hierbei kann die Fassung durch einen mit der Fassung verschweißten Deckelteil einer zur Einführung eines an einer Stromversorgungsleitung angeschlossen Steckers vorgesehenen Steckbuchse aus thermoplastischem Kunststoff verschlossen sein, deren Kontakte einerseits mit dem Metallstreifen und andererseits mit wenigstens einem Kontakt an der Innenseite des Deckelteils verbunden sind, wobei das oder jedes in der Fassung angeordnete Heizelement mit einer Kontaktfläche des Kontaktstreifens und einem Kontakt am Deckelteil in Verbindung steht. Diese Art der Stromversorgung des oder jedes Heizelements erleichtert die Anbringung der Heizvorrichtung an unterschiedlichen Stellen einer Fluidleitung entsprechend der Länge der Stromversorgungsleitung.

Vorzugsweise ist jedes Heizelement ein PTC-Widerstand. Ein solches Heizelement sorgt selbsttätig für die Einhaltung einer entsprechend der Auslegung des PTC-Widerstands vorbestimmten Temperatur der Heizvorrichtung unabhängig von seiner Umgebungstemperatur.

Sodann kann dafür gesorgt sein, daß die Wärmeleiteinrichtung einen weiteren Metallstreifen in dem thermoplastischen Kunststoff des anderen Schellenteils aufweist, der mit dem einen Metallstreifen im Bereich des Schellengelenks in gelenkigem Kontakt steht und sich in Richtung zum Verschluß erstreckt. Bei dieser Ausbildung wird die Wärme der Wärmequelle praktisch über den gesamten Umfang der Fluidleitung in das sie durchströmende Fluid geleitet.

Die Erfindung und ihre Weiterbildungen werden nachstehend anhand der beiliegenden Zeichnung eines bevorzugten Ausführungsbeispiels näher beschrieben. Darin stellen dar:
- Fig. 1: eine Seitenansicht des Ausführungsbeispiels der erfindungsgemäßen Heizvorrichtung,
- Fig. 2: den Querschnitt II-II der Fig. 1,
- Fig. 3: den Querschnitt III-III der Fig. 1,
- Fig. 4: eine Draufsicht auf die Heizvorrichtung nach Fig. 1,
- Fig. 5: eine perspektivische Darstellung der Heizvorrichtung nach Fig. 1,
- Fig. 6: eine Seitenansicht eines Teils der Heizvorrichtung nach Fig. 1 ohne die normalerweise fest damit verbundene Steckbuchse, die zur Einführung eines mit einer Stromversorgungsleitung verbundenen Steckers dient,
- Fig. 7: eine Draufsicht auf den in Fig. 6 dargestellten Teil der Heizvorrichtung,
- Fig. 8: den Schnitt VIII-VIII der Fig. 7,
- Fig. 9: den Schnitt IX-IX der Fig. 7,
- Fig. 10: eine perspektivische Ansicht des in Fig. 6 dargestellten Teils der Heizvorrichtung,
- Fig. 11: eine Draufsicht auf die normalerweise mit dem in den Fig. 6 - 9 dargestellten Teil verbundene Steckbuchse,
- Fig. 12: den Schnitt XII-XII der Fig. 11,
- Fig. 13: die Ansicht der Steckbuchse von rechts in Fig. 11,
- Fig. 14: eine Unteransicht der Steckbuchse,
- Fig. 15: eine Seitenansicht der Steckbuchse,
- Fig. 16: eine Seitenansicht eines Schellenteils der Heizvorrichtung nach Fig. 1,
- Fig. 17: den Schnitt XVII-XVII der Fig. 16,
- Fig. 18: eine Vorderansicht des Schellenteils nach Fig. 16,
- Fig. 19: den Schnitt XIX-XIX der Fig. 18,
- Fig. 20: eine perspektivische Ansicht des in den Fig. 16 - 18 dargestellten Schellenteils,
- Fig. 21: einen Metallstreifen einer Wärmeleiteinrichtung, die in dem in Fig. 6 dargestellten Teil der Heizvorrichtung eingebettet ist und zur Übertragung der Wärme von einer Wärmequelle auf eine Fluidleitung dient,
- Fig. 22: eine Ansicht des Metallstreifens von links in Fig. 21,
- Fig. 23: eine Draufsicht auf den Metallstreifen nach Fig. 21,
- Fig. 24: eine perspektivische Ansicht des Metallstreifens nach Fig. 21,
- Fig. 25: eine Seitenansicht eines weiteren Metallstreifens, der in dem in den Fig. 16 -20 dargestellten Schellenteil eingebettet ist,
- Fig. 26: eine Ansicht des weiteren Metallstreifens von links in Fig. 25 gesehen und
- Fig. 27: eine perspektivische Ansicht des Metallstreifens nach Fig. 25.

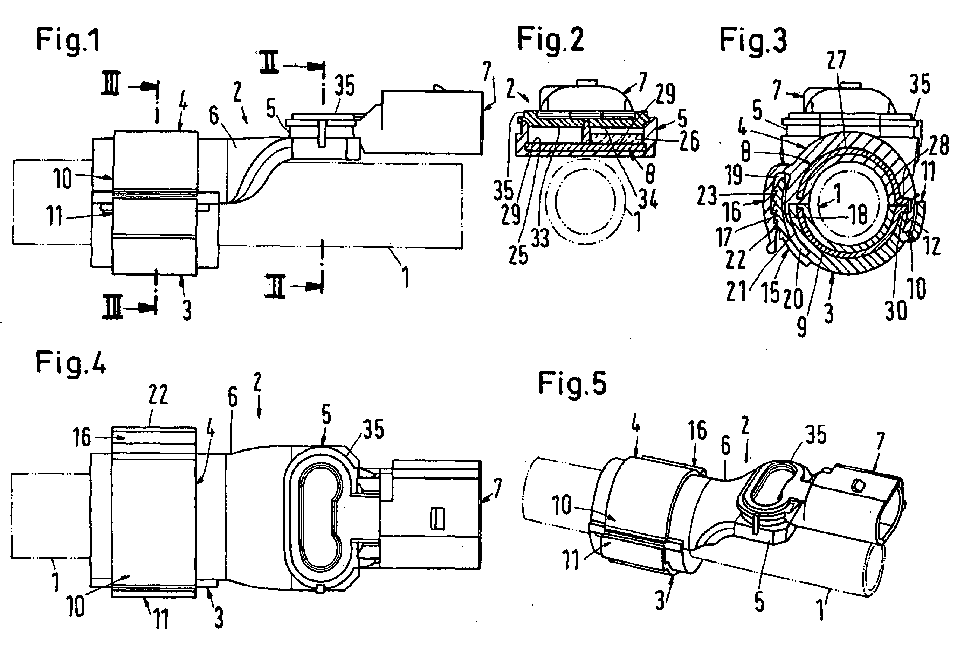

Die in den Fig. 1 - 5 dargestellte Heizvorrichtung dient zum Erwärmen eines durch eine (in strichpunktierten Linien) teilweise dargestellte Fluidleitung 1 fließenden Fluids, wie Dieselkraftstoff oder Wasser, an einer beliebigen Stelle der Fluidleitung 1, wo die Fluidleitung 1 tiefen Temperaturen ausgesetzt ist und die Gefahr besteht, daß das Fluid unterkühlt wird oder gefriert.

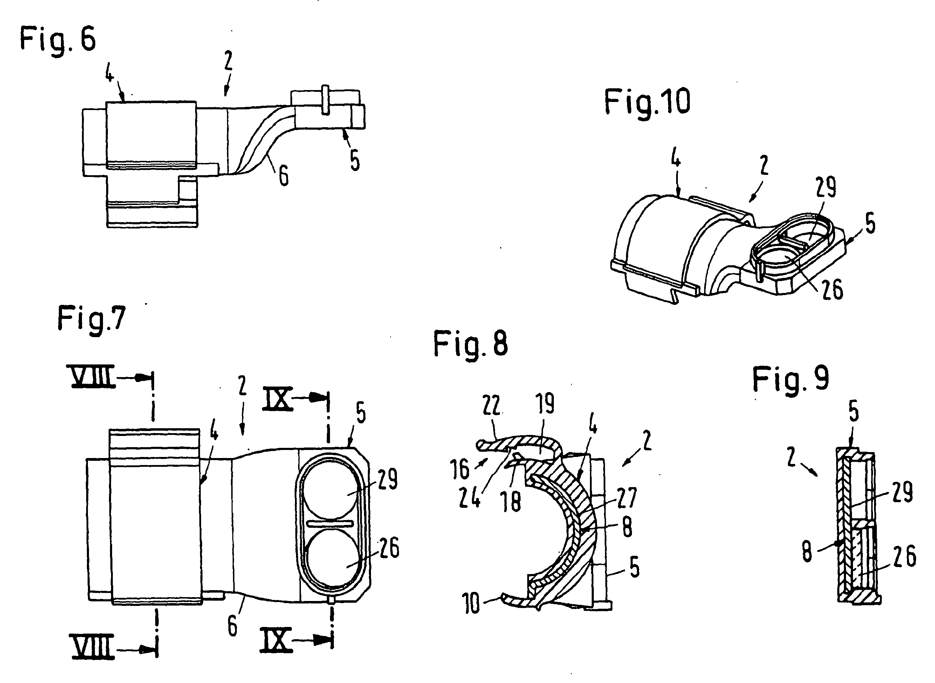

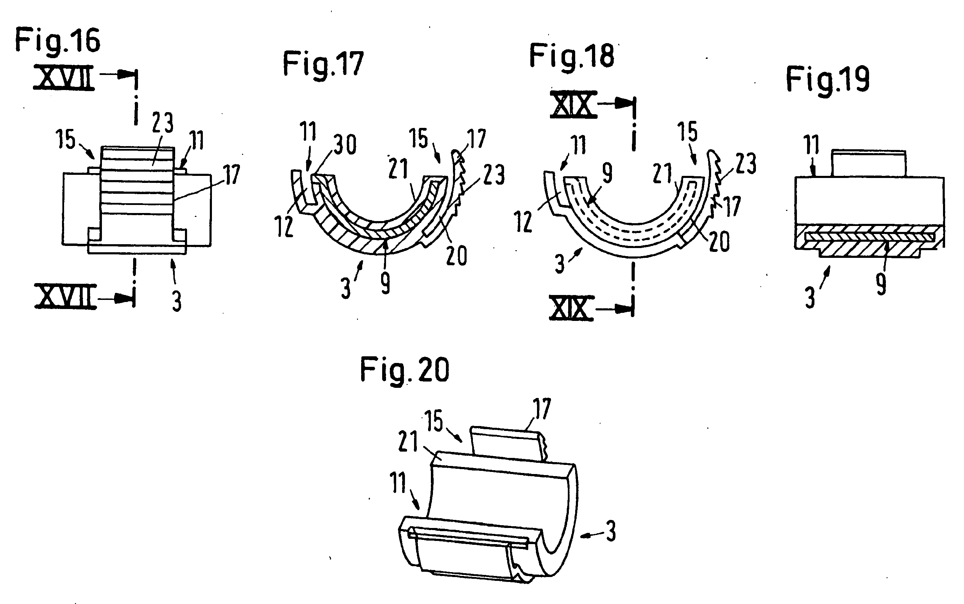

Die Heizvorrichtung besteht aus einem Körperteil 2, der in den Fig. 6 bis 10 einzeln dargestellt ist, und einem Schellenteil 3, der in den Fig. 16 bis 20 einzeln dargestellt ist.

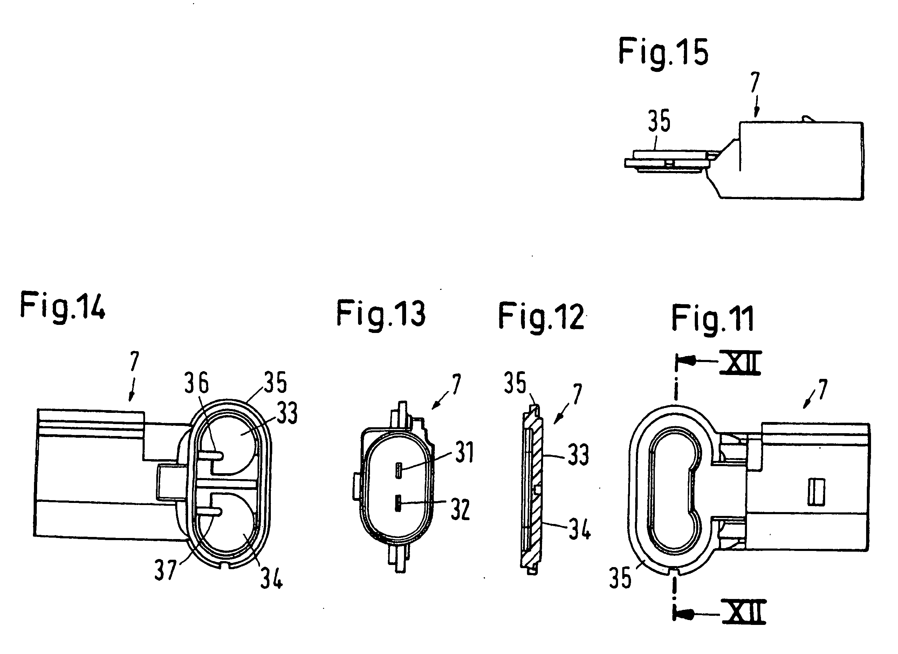

Der Körperteil 2 besteht aus einem Schellenteil 4, einer Fassung 5, einem Verbindungsteil 6, der den Schellenteil 4 mit der Fassung 5 verbindet, und einer Steckbuchse 7, die in den Fig. 11 bis 15 einzeln dargestellt ist.

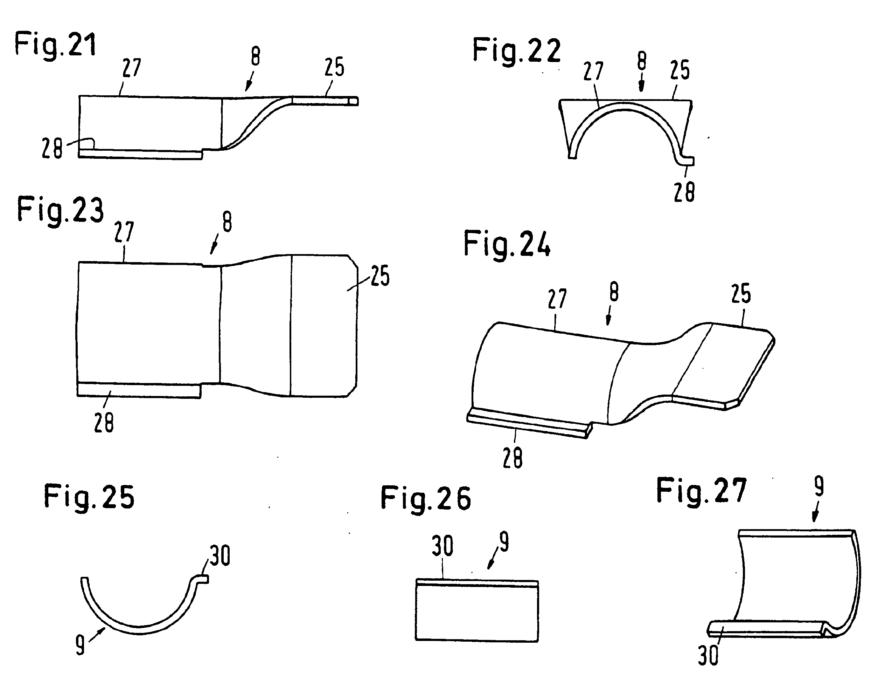

Die aus den Schellenteilen 3 und 4 bestehende Schelle verbindet eine in der Fassung 5 enthaltene Wärmequelle über eine Wärmeleiteinrichtung, bestehend aus zwei Metallstreifen 8 und 9, die in den Fig. 21 bis 27 einzeln dargestellt sind, mit der Fluidleitung 1.

Die Schellenteile 3 und 4 sind an ihrem einen Ende 10 beziehungsweise 11, rechts in Fig. 3, gelenkig zusammensteckbar, wobei das Ende 10 (Fig. 3 und 8) des Schellenteils 4 in eine Ausnehmung 12 (Fig. 3 und 17) des schnabel- oder gabelförmig ausgebildeten Endes 11 mit Spiel eingreift, so daß das Ende 10 in der Ausnehmung 12 schwenkbar ist.

An ihrem anderen Ende 15 und 16 sind beide Schellenteile 3 und 4 jeweils schnabel- oder gabelförmig ausgebildet, so daß sie mit ihren Schenkeln 17 beziehungsweise 18 in jeweils eine der Ausnehmungen 19 und 20 zwischen den Schenkeln 17 und 21 beziehungsweise 18 und 22 der Enden 15 und 16 eingreifen können.

Die Enden 15 und 16 der Schellenteile 3 und 4 sind auf der radial äußeren Seite des Schenkels 17 und der radial inneren Seite des Schenkels 22 jeweils mit einer Verzahnung 23 (Fig. 3 und 18) beziehungsweise 24 (Fig. 8) versehen, die gemäß Fig. 3 in Eingriff bringbar sind, wenn der Schenkel 17 am Ende 15 des Schellenteils 3 in die Ausnehmung 20 zwischen den Schenkeln 17 und 21 und das Ende 10 des Schellenteils 4 in die Ausnehmung 12 am Ende 11 des Schellenteils 3 eingeführt werden. Die Enden 15 und 16 der Schellenteile 3 und 4 bilden daher einen entsprechend der Anzahl der Zähne der Verzahnungen 23 und 24 stufenweise spannbaren Rastverschluß der Schelle.

Der Metallstreifen 8 der Wärmeleiteinrichtung steht mit einem ebenen Ende 25 (Fig. 2, 21 bis 24) mit wenigstens einem Heizelement in Form eines PTC-Widerstands 26 in der Fassung 5 in wärme- und elektrisch leitendem Kontakt. Mit seinem anderen Ende 27, das entsprechend der Krümmung des Schellenteils 4 gewölbt ist, ist der Metallstreifen 8 mit dem Schellenteil 4 verbunden.

Der Körperteil 2, der Schellenteil 3 sowie die Steckbuchse 7 weisen im wesentlichen thermoplastischen Kunststoff auf, wobei der Metallstreifen 8 mit seinem Ende 27 im Kunststoff des Schellenteils 4, mit seinem mittleren Abschnitt im Kunststoff des Verbindungsteils 6 und mit seinem Ende 25 im Kunststoff der Fassung 7 eingebettet ist und bei gleichzeitiger Herstellung des Schellenteils 4, des Verbindungsteils 6 und der Fassung 5 aus demselben Kunststoff, im Spritzgießverfahren, bis auf einen am Ende 27 radial nach außen abgewinkelten, seitlichen Rand 28 sowie im Boden der Fassung 5 nach oben frei liegende Kontaktflächen 29 (Fig. 2 und 10) mit diesem Kunststoff umspritzt worden ist. Auch der Metallstreifen 9 (Fig. 3, 25-27) ist entsprechend der Krümmung des Schellenteils 3 gewölbt und bis auf einen seitlichen, radial nach außen abgewinkelten Rand 30 mit thermoplastischem Kunststoff umspritzt. Im geschlossenen Zustand der Schelle nach Fig. 3 stehen die Ränder 28 und 30 der Metallstreifen 8 und 9 in wärmeleitendem Kontakt, so daß die Wärme der Wärmequelle durch die Metallstreifen 8 und 9 über nahezu den gesamten Umfang der Fluidleitung 1 durch deren Wand hindurch auf das Fluid in der Fluidleitung 1 großflächig übertragen wird. Hierzu trägt auch die etwa halbkreisförmige Wölbung der Metallstreifen 8 und 9 bei, deren Krümmungsachsen mit der der Fluidleitung 1 zusammenfallen.

Die Steckbuchse 7 (Fig. 1-5, 11-15) dient zur Einführung eines Steckers, der über eine Stromversorgungsleitung (ein Kabel) mit der Batterie des Kraftfahrzeugs verbunden ist. Die Steckbuchse 7 besteht ebenfalls im wesentlichen aus thermoplastischem Kunststoff, in den Kontaktzungen 31 und 32 oder -stifte, teilweise freibleibend, eingegossen sind. Diese Kontaktzungen 31, 32 (Fig. 13) stehen einerseits mit Kontakten 33, 34, die an der Innenseite eines Deckelteils 35 der Steckbuchse 7, unter Freilassung von Kontaktflächen zur elektrischen Kontaktierung des oder jedes PTC-Widerstands 26, eingegossen sind, und andererseits mit dem Metallstreifen 8 in Verbindung. Nachdem die Wärmequelle, das heißt, der oder jeder PTC-Widerstand 26, in der Fassung 5 angeordnet wurde, wird der Deckelteil 35 auf dem Öffnungsrand der Fassung 5, zum Beispiel im Ultra- oder Spiegelschweißverfahren, angeschweißt, so daß die Fassung 5 dicht verschlossen ist und die Kontakte 33, 34 über Kontaktfederelemente 36, 37 (Fig. 14) mit dem oder jedem PTC-Widerstand 26 elektrisch verbunden sind.

Die dargestellte Heizvorrichtung hat gegenüber einer in einer Unterbrechung der Fluidleitung 1 einzukuppelnden Heizvorrichtung den Vorteil, daß sie an einer beliebigen, der Gefahr einer Unterkühlung beziehungsweise des Gefrierens des durch die Fluidleitung 1 strömenden Fluids ausgesetzten Stelle der Fluidleitung 1 mittels der Schelle (3, 4) angebracht werden kann, ohne daß diese Schelle von vornherein vor der Herstellung des Kraftfahrzeugs bekannt zu sein braucht und ohne daß die Fluidleitung 1 an dieser Stelle getrennt beziehungsweise unterbrochen werden müßte. Darüber hinaus ist die Anbringung der Heizvorrichtung an der Fluidleitung äußerst einfach.

## Patentansprüche

1. Heizvorrichtung mit einer elektrischen Wärmequelle (26) zum Erwärmen eines Fluids in einer Fluidleitung (1) eines Kraftfahrzeugs, und mit einer Wärmeleiteinrichtung (8, 9), die an ihrem einen Ende (25) mit der Wärmequelle (26) in Verbindung steht, **dadurch gekennzeichnet, daß** die Wärmeleiteinrichtung (8, 9) an ihrem anderen Ende (27) mit einer Schelle (3, 4) zum Verbinden der Wärmeleiteinrichtung (8, 9) mit der Fluidleitung (1) verbunden ist, wobei die Wärmequelle (26) und die Schelle (3, 4) beabstandet zueinander ausgebildet sind.

2. Heizvorrichtung nach Anspruch 1, **dadurch gekennzeichnet, daß** die Wärmeleiteinrichtung (8, 9) einen Metallstreifen (8) aufweist, dessen eines Ende (25) mit der Wärmequelle (26) in Kontakt steht und dessen anderes Ende (27) mit der Schelle (3, 4) verbunden ist.

3. Heizvorrichtung nach Anspruch 2, **dadurch gekennzeichnet, daß** die Schelle zwei Teile (3, 4) aufweist, die an ihrem einen Ende (10, 11) gelenkig zusammensteckbar und an ihrem anderen Ende (15, 16) durch einen Verschluß verbindbar sind.

4. Heizvorrichtung nach Anspruch 3, **dadurch gekennzeichnet, daß** der Verschluß spannbar ist.

5. Heizvorrichtung nach Anspruch 3 oder 4, **dadurch gekennzeichnet, daß** der Verschluß ein Rastverschluß ist.

6. Heizvorrichtung nach einem der Ansprüche 3 bis 5, **dadurch gekennzeichnet, daß** der Verschluß an den zu verbindenden Enden (15, 16) der Schellenteile (3, 4) je eine von zwei in Eingriff bringbaren Verzahnungen (23, 24) aufweist.

7. Heizvorrichtung nach Anspruch 6, **dadurch gekennzeichnet, daß** die eine Verzahnung (23) in einer Ausnehmung (19) in dem einen (16) der durch den Verschluß zu verbindenden Enden (15, 16) des einen Schellenteils (4) ausgebildet und das andere (15) der durch den Verschluß zu verbindenden Enden (15, 16) in die Ausnehmung (19) einführbar ist.
der Fluidleitung (1) konzentrischen Krümmungsachse aufweist.

8. Heizvorrichtung nach einem der Ansprüche 2 bis 7, **dadurch gekennzeichnet, daß** der Metallstreifen (8) eine Wölbung aufweist.

9. Heizvorrichtung nach Anspruch 8, **dadurch gekennzeichnet, daß** die Wölbung zumindest in einem mit dem einen Schellenteil (4) verbundenen Endabschnitt (27) des Metallstreifens (8) eine zur Mittelachse

10. Heizvorrichtung nach einem der Ansprüche 3 bis 9, **dadurch gekennzeichnet, daß** die Schellenteile (3, 4) im Spritzgießverfahren ausgebildet sind.

11. Heizvorrichtung nach Anspruch 10, **dadurch gekennzeichnet, daß** die Schelle thermoplastischen Kunststoff aufweist.

12. Heizvorrichtung nach Anspruch 11, **dadurch gekennzeichnet, daß** der Metallstreifen (8) durch den thermoplastischen Kunststoff der Schelle umspritzt ist.

13. Heizvorrichtung nach einem der Ansprüche 11 oder 12, **dadurch gekennzeichnet, daß** der den Metallstreifen (8) umgebende Kunststoff an dem von der Schelle abgekehrten Ende des Metallstreifens (8) als Fassung (5) zur Aufnahme der Wärmequelle (26) geformt ist und der Kunststoff in der Fassung (5) wenigstens eine Kontaktfläche (19) des Metallstreifens (8) zur thermischen und elektrischen Kontaktierung durch wenigstens ein Heizelement (26) der Wärmequelle freiläßt.

14. Heizvorrichtung nach Anspruch 13, **dadurch gekennzeichnet, daß** die Fassung (5) durch einen mit der Fassung (5) verschweißten Deckelteil (35) einer zur Einführung eines an einer Stromversorgungsleitung angeschlossenen Steckers vorgesehenen Steckbuchse (7) aus thermoplastischem Kunststoff verschlossen ist, deren Kontakte (31, 32) einerseits mit dem Metallstreifen (8) und andererseits mit wenigstens einem Kontakt (34, 35) an der Innenseite des Dekkelteils (35) verbunden sind, wobei das oder jedes in der Fassung (5) angeordnete Heizelement (26) mit einer Kontaktfläche (29) des Metallstreifens (8) und einem Kontakt (33, 34) am Deckelteil (35) in Verbindung steht.

15. Heizvorrichtung nach Anspruch 13 oder 14, **dadurch gekennzeichnet, daß** das oder jedes Heizelement ein PTC-Widerstand ist.

16. Heizvorrichtung nach einem der Ansprüche 10 bis 15, **dadurch gekennzeichnet, daß** die Wärmeleiteinrichtung (8, 9) in dem thermoplastischen Kunststoff des anderen Schellenteils (3) einen weiteren Metallstreifen (9) aufweist, der mit dem einen Metallstreifen (8) im Bereich des Schellengelenks in gelenkigem Kontakt steht und sich in Richtung zum Verschluß erstreckt.

## Claims

1. Heating device comprising an electrical heat source (26) for heating a fluid in a fluid line (1) of a motor vehicle, and a heat conducting device (8, 9) which is at one end (25) connected to the heat source (26), **characterized in that** the heat conducting device (8, 9) with its other end (27) is connected to a clamp (3, 4) for connecting the heat conducting device (8, 9) to the fluid line (1) wherein the heat source (26) and the clamp (3, 4) are made with a distance to each other.

2. Heating device according to claim 1, **characterized in that** the heat conducting device (8, 9) comprises a metal strip (8) the one end (25) of which is in contact with the heat source (26) and the other end (27) of which is connected to the clamp (3, 4).

3. Heating device according to claim 2, **characterized in that** the clamp (3, 4) comprises two parts which at one end (10, 11) thereof are insertable one into the other in an articulated manner, and at another end (15, 16) thereof are connectable by a closure.

4. Heating device according to claim 3, **characterized in that** the closure is tensionable.

5. Heating device according to claim 3, **characterized in that** the closure is a snap-in closure.

6. Heating device according to claim 3, **characterized in that** the closure has at the connectable ends (15, 16) of the clamp parts (3, 4) each one of two toothings (23, 24) which can be placed into engagement with each other.

7. Heating device according to claim 6, **characterized in that** the one of the toothings (22) is formed in a recess (19) provided in one (16) of the ends (15, 16) to be connected by the closure of the one clamp part (4) and the other (15) of the ends (15, 16) to be connected by the closure is insertable into the recess (19).

8. Heating device according to one of claims 2 to 7, **characterized in that** the metal strip (8) has a curvature.

9. Heating device according to claim 8, **characterized in that** at least in an end portion (27) of the metal strip (8) connected to one clamp part (4), the curvature has an axis of curvature concentric to a centre axis of the fluid line (1).

10. Heating device according to one of claims 3 to 9, **characterized in that** the clamp parts (3, 4) are made by injection molding.

11. Heating device according to claim 10, **characterized in that** the clamp comprises thermoplastic material.

12. Heating device according to claim 11, **characterized in that** the metal strip (8) is surrounded by the thermoplastic material of the clamp.

13. Heating device according to claim 11 or 12, **characterized in that** the plastic material surrounding the metal strip (8) is shaped at an end of the metal strip (8) facing away from the clamp as a receptacle (5) for receiving the heat source (25), and the plastic material in the receptacle (5) leaves free at least one contact surface (19) of the metal strip (8) for a thermal and electrical contact by at least one heating element (26) of the heat source.

14. Heating device according to claim 13, **characterized in that** the receptacle (5) is closed by a cover part (35) welded to the receptacle (5) and being part of a plug-in socket (7) of thermoplastic material provided for inserting a plug connected to a current supply line, the contacts (31, 32) of which on the one hand are connected to the metal strip (8) and on the other hand are connected to at least one contact (34, 35) at the inner side of the cover part (35), wherein the or each heating element (26) arranged in the receptacle (5) is in contact with a contact surface (29) of the metal strip (8) and with a contact (33, 34) at the cover part (35).

15. Heating device according to claim 13 or 14, **characterized in that** the or each heating element is a PTC resistor.

16. Heating device according to one of claims 10 to 15, **characterized in that** the heat conducting device (8, 9) has in the thermoplastic material of the other clamp part (3) another metal strip (9), which is in articulated contact with the metal strip (8) in an area of' articulation of the clamp, and extends in a direction toward the closure.

## Revendications

1. Dispositif de chauffage comportant une source de chaleur (26) électrique servant à chauffer un fluide dans une conduite de fluide (1) d'un véhicule automobile, et comportant un dispositif conducteur de chaleur (8, 9), lequel est en liaison au niveau de l'une de ses extrémités (25) avec une source de chaleur (26), **caractérisé en ce que** le dispositif conducteur de chaleur (8, 9) est relié au niveau de l'autre extrémité (27) à un collier de serrage (3, 4) servant à relier le dispositif conducteur de chaleur (8, 9) à la conduite de fluide (1), la source de chaleur (26) et le collier de serrage (3, 4) étant réalisés de manière espacée l'un par rapport à l'autre.

2. Dispositif de chauffage selon la revendication 1, **caractérisé en ce que** le dispositif conducteur de chaleur (8, 9) présente une lame de métal (8) dont l'une des extrémités (25) est en contact avec la source de chaleur (26) et dont l'autre extrémité (27) est reliée au collier de serrage (3, 4).

3. Dispositif de chauffage selon la revendication 2, **caractérisé en ce que** le collier de serrage présente deux parties (3, 4) qui peuvent être rassemblées de manière articulée au niveau de l'une des extrémités (10, 11) du collier de serrage et qui peuvent être reliées au niveau de l'autre extrémité (15, 16) par un dispositif de fermeture.

4. Dispositif de chauffage selon la revendication 3, **caractérisé en ce que** le dispositif de fermeture peut être serré.

5. Dispositif de chauffage selon la revendication 3 ou 4, **caractérisé en ce que** le dispositif de fermeture est un dispositif de fermeture à cran d'arrêt.

6. Dispositif de chauffage selon l'une quelconque des revendications 3 à 5, **caractérisé en ce que** le dispositif de fermeture présente au niveau des extrémités (15, 16) à relier des parties du collier de serrage (3, 4) respectivement une des deux dentures (23, 24) pouvant être mises en prise.

7. Dispositif de chauffage selon la revendication 6, **caractérisé en ce qu'**une denture (23) au moins au nombre de une est réalisée dans un évidement (19) dans une extrémité (16) au moins au nombre de une des extrémités (15, 16) à relier par le dispositif de fermeture de l'une des parties du collier de serrage (4), et **en ce que** l'autre extrémité (15) des extrémités (15, 16) à relier par le dispositif de fermeture peut être introduite dans l'évidement (19).

8. Dispositif de chauffage selon l'une quelconque des revendications 2 à 7, **caractérisé en ce que** la lame de métal (8) présente une concavité.

9. Dispositif de chauffage selon la revendication 8, **caractérisé en ce que** la concavité présente au moins dans une section d'extrémité (27) de la lame de métal (8) reliée à la partie du collier de serrage (4) au moins au nombre de une un axe de courbure concentrique par rapport à l'axe médian de la conduite de fluide (1).

10. Dispositif de chauffage selon l'une quelconque des revendications 3 à 9, **caractérisé en ce que** les parties du collier de serrage (3, 4) sont réalisées au cours d'un moulage par injection.

11. Dispositif de chauffage selon la revendication 10, **caractérisé en ce que** le collier de serrage présente une matière synthétique thermoplastique.

12. Dispositif de chauffage selon la revendication 11, **caractérisé en ce que** la lame de métal (8) est couverte par extrusion de matière synthétique thermoplastique du collier de serrage.

13. Dispositif de chauffage selon l'une quelconque des revendications 11 ou 12, **caractérisé en ce que** la matière synthétique entourant la lame de métal (8) est moulée au niveau de l'extrémité de la lame de métal (8), laquelle extrémité est opposée au collier de serrage, en tant que châssis (5) servant à recevoir la source de chaleur (26), et **en ce que** la matière synthétique laisse libre dans le châssis (5) au moins une face de contact (19) de la lame de métal (8) servant à la mise en contact thermique et électrique grâce au moins à un élément de chauffage (26) de la source de chaleur.

14. Dispositif de chauffage selon la revendication 13, **caractérisé en ce que** le châssis (5) est fermé par un élément de couverture (35) - soudé au châssis (5) - d'une prise d'enfichage (7) en matière synthétique thermoplastique qui est prévue pour introduire une fiche raccordée à un câble d'alimentation électrique et dont les contacts (31, 32) sont reliés d'une part à la lame de métal (8) et d'autre part à au moins un contact (34, 35) au niveau du côté interne de l'élément de couverture (35), sachant que le ou chaque élément de chauffage (26) disposé dans le châssis (5) est en liaison avec une face de contact (29) de la lame de métal (8) et avec un contact (33, 34) au niveau de l'élément de couverture (35).

15. Dispositif de chauffage selon la revendication 13 ou 14, **caractérisé en ce que** le ou chaque élément de chauffage est une résistance PTC.

16. Dispositif de chauffage selon l'une quelconque des revendications 10 à 15, **caractérisé en ce que** le dispositif conducteur de chaleur (8, 9) présente dans la matière synthétique thermoplastique de l'autre partie du collier de serrage (3) une autre lame de métal (9), laquelle se trouve en contact de manière articulée avec la lame de métal (8) au moins au nombre de une dans la zone de l'articulation du collier de serrage et laquelle s'étend en direction du dispositif de fermeture.
